# EUROPÄISCHE PATENTSCHRIFT

(11) **EP 1 195 269 B1**
(45) Veröffentlichungstag und Bekanntmachung des Hinweises auf die Patenterteilung: **04.05.2005**
(21) Anmeldenummer: 01120545.7
(22) Anmeldetag: 29.08.2001
(51) Int. Cl.: B44B 5/00, B23P 15/00

(54) **Verfahren und Vorrichtungen zur Herstellung einer zylindrischen Prägeform**
Process und apparatus for producing a cylindrical embossing form
Procede et dispositif pour la production d'une forme pour l'impression

(30) Priorität: 05.10.2000 DE 10049283
(43) Veröffentlichungstag der Anmeldung: 10.04.2002
(73) Patentinhaber: Hueck Folien GmbH & Co. KG, 92712 Pirk (DE)
(72) Erfinder: Helm, Ferdinand, 92637 Weiden (DE)
(74) Vertreter: Schneck, Herbert, Dipl.-Phys., Dr.

(56) Entgegenhaltungen:
- EP-A- 0 703 092
- WO-A-00/13873
- DE-A- 4 125 931
- DE-C- 19 820 357
- US-A- 4 377 335
- US-A- 5 499 580
- US-A- 5 552 005
- US-A- 5 557 960
- US-A- 5 687 647
- WEHNER M ET AL: "ENTZUNDERN VON SCHWEISSNAEHTEN AN EDELSTAHLBLECHEN MIT LASER-STRAHLUNG" VDI Z, VDI VERLAG GMBH. DUSSELDORF, DE, Bd. 134, Nr. 1, 1992, Seiten 68-69, XP000277313 ISSN: 0042-1766

## Beschreibung

Die Erfindung richtet sich auf ein Verfahren und eine Vorrichtung zur Herstellung einer zylindrischen Prägeform zur Befestigung auf einem rotierenden Spannzylinder zur Herstellung von Endlosbahnen mit Oberflächenstrukturen, wie Hologrammen, Cinegrammen, Exelgrammen für die Sicherheitstechnik und/oder sonstige Oberflächenstrukturen für dekorative Zwecke.

In der WO 00/13873 A1, die den nächstliegenden Stand der Technik für Anspruch 1 beschreibt, ist ein Verfahren zur Herstellung einer zylindrischen Prägeform zur Befestigung auf einem rotierenden Spannzylinder zur Herstellung von Endlosbahnen mit Oberflächenstrukturen beschrieben. Das plattenförmige Ausgangsmaterial wird gebogen und von der Rückseite mittels einer Schweißnaht verbunden.

Mit der DE 41 25 931 A1 wird ein Verfahren zur Herstellung einer zylindrischen Prägeform zum Prägen eines Reliefs offenbart. Nach dem Biegen und Schweißverbinden des plattenförmigen Ausgangsmaterials wird die Struktur auf der Vorderseite mittels eines Ätzprozesses hergestellt. Diese Struktur reicht nicht bis an die Verbindungsnaht des plattenförmigen Ausgangsmaterials heran.

In der US 5,499,580 wird ein Verfahren zur Herstellung einer zylindrischen Prägeform mittels einer Saugelemente umfassenden und von innen an das zu biegende plattenförmige Ausgangsmaterial angreifenden Greifeinrichtung beschrieben. Dieses Dokument ist der nächstliegende Stand der Technik für Anspruch 7. Es offenbart eine Vorrichtung nach dem Oberbegriff dieses Anspruchs.

Herkömmlicherweise wird das plattenförmige Ausgangsmaterial flächig auf den Spannzylinder aufgeklebt oder anderweitig befestigt. Dies bringt den Nachteil mit sich, daß an den Kanten im Bereich des Plattenstoßes quer zur Laufrichtung eine Fuge entsteht. In dieser Fuge setzen sich häufig Reste des verformbaren Substrates (z.B. Lack) fest, speziell wenn die Abformung in unvernetzte bzw. nasse Schichten erfolgt. Derartige Ablagerungen stören das Prägebild, zumal sie kontinuierlich in ihrer Größe zunehmen, die Naht hierdurch praktisch wächst.

Hiervon ausgehend liegt der Erfindung die Aufgabe zugrunde, die Nachteile der bekannten Verfahrens zu vermeiden und ein Verfahren zu schaffen, welches rationell und schnell durchführbar ist und zu einer qualitativ sehr hochwertigen Abformung der Oberflächenstruktur führt.

Diese Aufgabe wird erfindungsgemäß dadurch gelöst, daß das plattenförmige Ausgangsmaterial um eine insbesondere zylinderförmige Hilfsvorrichtung herumgebogen wird, deren Durchmesser etwa dem Durchmesser des Spannzylinders entspricht, wobei das plattenförmige Ausgangsmaterial so konfektioniert ist, daß beim Herumlegen um die Hilfsvorrichtung die Längskanten bündig aneinanderstoßen, daß das Plattenmaterial in dieser Position fixiert wird, und daß dann die Längskanten mittels eines Lasers fugenfrei verschweißt werden und auf die Schweißnaht mittels eines Lasers eine Glättnaht aufgebracht wird. Die so hergestellte Prägeform kann dann von der Hilfsvorrichtung abgenommen und auf einem Spannzylinder festgelegt werden.

Es ist beim Einsatz gepulster Laser zum Verschweißen vorgesehen, daß auf die Schweißnaht mittels eines Lasers eine Glättnaht aufgebracht wird. Diese Glättnaht erfüllt selbst keine Verbindungsfunktion, sondern dient ausschließlich dazu, die Oberfläche der verbindenden, durch den ersten Laser hergestellten Naht zu glätten.

Zur Glättung dieser Naht kann zusätzlich eine elastisch gegen die Naht angedrückte Glättrolle vorgesehen sein.

Zur Erzielung exakt bündig aneinander anliegender Stoßkanten ist vorgesehen, daß das Zuschneiden des plattenförmigen Materials mittels eines Schneidlasers bewerkstelligt wird.

Die so hergestellte Prägeform ist in an sich bekannter Weise zum Aufschieben auf den Spannzylinder mittels Druckluft elastisch aufweitbar, wobei die Prägeform nach dem Abschalten der Druckluft unter radialem Zusammenziehen auf dem Zylindermantel des Spannzylinders zur Auflage kommt.

Alternativ kann ein Schrumpfverfahren vorgesehen sein, wonach der Spannzylinder von innen gekühlt wird, so daß er sich in radialer Richtung kontrahiert und die Prägeform aufgeschoben werden kann, welche dann bei der anschließenden Erwärmung festsitzt.

Zusammenfassend läßt sich also feststellen, daß es aufgrund des erfindungsgemäßen Verfahrens möglich ist, eine einfache und schnelle Montage und zerstörungsfreie Demontage der Prägeform auf einen Spannzylinder zu realisieren, wobei eine Mehrfachverwendung der Prägeform bei Motivwechsel möglich ist. Durch die axiale und radiale Verschiebbarkeit der Prägeform auf dem Spannzylinder sind Positionskorrekturen möglich. Weiterhin können problemlos mehrere solcher Prägeformen auf einem Spannzylinder montiert werden. Weiterhin wird eine einfache Positionskorrektur auch passend zu dem jeweils nachfolgenden Druckwerkzeug (z. B. Tiefdruckzylinder) ermöglicht.

## Patentansprüche

1. Verfahren zur Herstellung einer zylindrischen Prägeform zur Befestigung auf einem rotierenden Spannzylinder zur Herstellung von Endlosbahnen mit Oberflächenstrukturen, wie Hologrammen, Cinegrammen, Exelgrammen für die Sicherheitstechnik oder für dekorative Zwecke, **dadurch gekennzeichnet, daß** das plattenförmige Ausgangsmaterial um eine insbesondere zylinderförmige Hilfsvorrichtung herumgebogen wird, deren Durchmesser etwa dem Durchmesser des Spannzylinders entspricht, wobei das plattenförmige Ausgangsmaterial so konfektioniert ist, daß beim Herumlegen um die Hilfsvorrichtung die Längskanten bündig aneinanderstoßen, daß das Plattenmaterial in dieser Position fixiert wird, daß dann die Längskanten mittels eines Lasers fugenfrei verschweißt werden und daß auf die Schweißnaht mittels eines Lasers eine Glättnaht aufgebracht wird.

2. Verfahren nach Anspruch 1, **dadurch gekennzeichnet, daß** die Schweißnaht zusätzlich mittels einer elastisch angedrückten Glättwalze geglättet wird.

3. Verfahren nach Anspruch 1, **dadurch gekennzeichnet, daß** das Zuschneiden des plattenförmigen Materials mittels eines Schneidlasers bewerkstelligt wird.

4. Verfahren nach Anspruch 1, **dadurch gekennzeichnet, daß** die durch Verschweißen der Längsnähte hergestellte Prägeform von dem Hilfsvorrichtung abgenommen und auf den Spannzylinder aufgeschoben wird.

5. Verfahren nach Anspruch 4, **dadurch gekennzeichnet, daß** der Spannzylinder zum Verschieben und Positionieren der Prägeform radial nach außen gerichtete Druckluftöffnungen aufweist, durch die zum Festlegen abschaltbare Druckluft ausströmt.

6. Verfahren nach Anspruch 4, **dadurch gekennzeichnet, daß** der Spannzylinder zum Aufschieben und Positionieren der Prägeform gekühlt wird.

7. Vorrichtung zur Durchführung des Verfahrens nach einem der Ansprüche 1 bis 6, wobei eine Einrichtung zum Biegen des plattenförmigen Ausgangsmaterials, welche Festlegeeinrichtungen zum bündig aneinander anstoßenden Festlegen der Längskanten umfaßt, sowie ein Laser zum fugenfreien Schweißen der Längskanten vorgesehen sind, **dadurch gekennzeichnet, daß** die Einrichtung zum Biegen des plattenförmigen Materials eine zylinderförmige Hilfsvorrichtung, deren Durchmesser etwa dem Durchmesser eines Spannzylinders entspricht, umfaßt und ein Laser zum Aufbringen einer Glättnaht vorgesehen ist.

## Claims

1. A method of producing a cylindrical embossing sheet to be fixed on a rotating clamping cylinder for the manufacture of continuous webs having surface structures, such as holograms, cinegrams, exelgrams, for safety and reliability engineering or decoration purposes, **characterized in that** the plate-like starting material is bent around an auxiliary implement in particular of cylindrical shape, the diameter of which corresponds approximately to the diameter of the clamping cylinder, with the plate-like starting material being prepared such that, when it is placed around the auxiliary implement, the longitudinal edges butt against each other by a flush joint, and that the plate-like material is fixed in this position, that the longitudinal edges are welded together without any gaps by a laser and that a smoothing seam is applied to the weld by a laser.

2. A method according to claim 1, **characterized in that** the weld is additionally smoothed by a smoothing roll that is flexibly pressed thereon.

3. A method according to claim 1, **characterized in that** cutting the plate-like material to size is implemented by a cutting laser.

4. A method according to claim 1, **characterized in that** the embossing sheet, which is produced by the longitudinal seams being welded together, is removed from the auxiliary implement and placed on the clamping cylinder.

5. A method according to claim 4, **characterized in that**, for the embossing sheet to be moved into place and positioned, the clamping cylinder comprises compressed-air openings, which are directed radially outwards and through which compressed air is ejected that can be switched off for the embossing sheet to be fixed.

6. A method according to claim 4, **characterized in that** the clamping cylinder is cooled for the embossing sheet to be placed on and positioned.

7. An apparatus for putting the method into practice according to one of claims 1 to 6, wherein an implement for bending the plate-like starting material, including devices for fixing the longitudinal edges so that they butt against each other by a flush joint, as well as a laser for welding together the longitudinal edges without any gaps are provided, **characterized in that** the device for bending the plate-like material comprises a cylindrical auxiliary implement, the diameter of which corresponds approximately to the diameter of the clamping cylinder, and a laser for applying a smoothing seam.

## Revendications

1. Procédé de fabrication d'une matrice à étamper cylindrique pour fixation sur un cylindre de serrage tournant pour la fabrication de feuilles sans fin avec des structures de surface telles des hologrammes, des cinégrammes, des exelgrammes pour les techniques de sécurité ou à des fins de décoration, **caractérisé en ce que** le matériau initial en forme de plaque est cintré autour d'un dispositif auxiliaire, en particulier de forme cylindrique, dont le diamètre correspond à peu près au diamètre du cylindre de serrage, sachant que le matériau de départ en forme de plaque est confectionné de telle sorte que, lors de l'enroulement autour du dispositif auxiliaire, les arêtes longitudinales butent l'une sur l'autre de manière jointive, **en ce que** le matériau en forme de plaque est immobilisé dans cette position, **en ce que** les arêtes longitudinales sont ensuite soudées sans laisser d'espace au moyen d'un laser, et **en ce qu'**un cordon de lissage est appliqué au laser sur le cordon de soudure.

2. Procédé selon la revendication 1, **caractérisé en ce que** le cordon de soudure est lissé en plus au moyen d'un rouleau pressé dessus élastiquement.

3. Procédé selon la revendication 1, **caractérisé en ce que** la découpe aux cotes du matériau en forme de plaque est réalisée au moyen d'un laser de coupe.

4. Procédé selon la revendication 1, **caractérisé en ce que** la matrice à étamper fabriquée par soudure des joints longitudinaux est retirée du dispositif auxiliaire et est enfilée sur le cylindre de serrage.

5. Procédé selon la revendication 4, **caractérisé en ce que** le cylindre de serrage comporte pour le décalage et le positionnement de la matrice à étamper des ouvertures pour de l'air comprimé dirigées radialement vers l'extérieur, par lesquelles s'écoule de l'air comprimé pouvant être coupé pour l'immobilisation.

6. Procédé selon la revendication 4, **caractérisé en ce que**, pour l'emmanchement et le positionnement de la matrice à étamper, le cylindre de serrage est refroidi.

7. Dispositif pour l'exécution du procédé selon l'une quelconque des revendications 1 à 6, dans lequel sont prévus un dispositif pour le cintrage du matériau de départ en forme de plaque, lequel dispositif comporte des dispositifs de fixation pour l'immobilisation avec les arêtes longitudinales butant de façon jointive l'une sur l'autre, ainsi qu'un laser pour le soudage sans joint des arêtes longitudinales, **caractérisé en ce que** le dispositif pour le cintrage du matériau en forme de plaque comporte un dispositif auxiliaire cylindrique dont le diamètre correspond à peu près au diamètre du cylindre de serrage, et **en ce qu'**un laser est prévu pour l'application d'un cordon de lissage.
